# EUROPEAN PATENT APPLICATION

(11) **EP 1 026 608 A2**
(43) Date of publication of application: **09.08.2000**
(21) Application number: 00300385.2
(22) Date of filing: 19.01.2000
(51) Int. Cl.: G06F 17/60

(54) **Method and apparatus for logging web user activity using client-side support**

(30) Priority: 28.01.1999 US 239134
(71) Applicant: LUCENT TECHNOLOGIES INC., Murray Hill, New Jersey 07974-0636 (US)
(72) Inventor: Anupam, Vinod, Somerset, New Jersey 08807 (US); Gehani, Narain H., Summit, New Jersey 07901 (US)
(74) Representative: Watts, Christopher Malcolm Kelway, Dr.

(57) **Abstract**

Methods and apparatus for tracking client activity associated with a browser running on a client device in conjunction with a server, wherein the client device and the server are in a computer network, are provided. In an illustrative embodiment, a method employs client-side executable content that is dynamically downloaded into the browser, such as an applet. The client-side executable content or applet is referred to as an "agent." The agent is preferably downloaded into the browser along with a document requested by the client and returned by the server. Once established in the browser, the agent keeps track of user interaction that occurs in the browser, that is, client-side interaction. The granularity of this tracking can be regulated, allowing the agent in the browser to collect as much information as is available, or some subset thereof. The agent then periodically notifies a server-side entity referred to as a "logger" of the information that it has collected. The logger stores the information in a log database for subsequent use.

## Description

### Field of the Invention

The present invention relates to methods and apparatus for logging user activity on a computer-based information network and, more particularly, to unified logging of web user activity using client-side support.

### Background of the Invention

A browser is a software program run on a computer that allows a computer user to request, view, manipulate and/or send information across a computer network. For example, a web-based browser serves as a user's front-end interface to the World Wide Web (WWW) on the Internet. As is known, using a web-based browser, a user types in or selects the address or URL (Uniform Resource Locator) of a website to request a webpage (e.g., homepage) associated with the website that he wishes to visit. The browser transmits the request over the Internet to the web server with which the website is associated and the server downloads the homepage to the browser for viewing by the user. The homepage is typically an index to other pages on that website that can be accessed by clicking on icons which represent the addresses of the other pages.

Typically, at the web server, the incoming URL request from the web browser is logged (i.e., stored). The web server then performs computations appropriate to fulfilling the request, generates a response, and transmits or downloads this information to the web browser. A log entry is generated when the request is received and typically contains a record of attributes associated with the request such as, for example, when the request was received, who initiated the request, the name of the requested object, etc.

However, such a conventional web server logging technique has many shortcomings. For example, information captured by a web server log is only generic web server information, that is, the "who, what, and when" associated with the request. Thus, every common gate interface (CGI) program running on the web server or, for that matter, any executable entity that dynamically generates content, has to do its own logging. Further, the manner in which the program or other executable entity accomplishes the logging is dependent on the web server. Also, web server logs only capture information at the time a request is submitted to the server. Therefore, existing web server logs do not capture client-side (i.e., end user) activity. As a result of such shortcomings, web server logging is disjointed in that separate logs are created for various programs. Furthermore, the web server and, more particularly, the party operating the web server, does not receive any information regarding how end users interact with the information the web server provides.

### Summary of the Invention

The present invention provides methods and apparatus for permitting unified logging and client-side activity logging. As will be evident, such logging is unified in that the techniques of the invention are not dependent on the server, CGI programs, or other executable content associated with the server. Also, information relating to client-side activity is advantageously logged at the server throughout a user's interaction with a downloaded document in addition to any generic web server information logged at the time of a document request.

In an illustrative embodiment, the invention accomplishes these and other objects and advantages by employing client-side executable content that is dynamically downloaded into the browser, such as an applet. As is known, an applet is a limited-function, utility program. The client-side executable content or applet is referred to as an "agent." The agent is preferably downloaded into a browser running on the client device along with a document requested by the client and returned by the server. Once established in the browser, the agent keeps track of user interaction that occurs in the browser, that is, client-side interaction. The granularity of this tracking can be regulated, allowing the agent in the browser to collect as much information as is available, or some subset thereof. The agent then periodically notifies a server-side entity referred to as a "logger" of the information that it has collected. The logger stores the information in a log database for subsequent use. Advantageously, the present invention may be implemented with unmodified standard web browsers that support executable content.

These and other objects, features and advantages of the present invention will become apparent from the following detailed description of illustrative embodiments thereof, which is to be read in connection with the accompanying drawings.

### Brief Description of the Drawings

FIG. 1 is a block diagram illustrating an exemplary embodiment of a web user activity logging arrangement according to the present invention;
FIG. 2 is a block diagram illustrating a client-server system in which web user activity logging according to the invention may be implemented;
FIG. 3 is a flow chart illustrating a web user activity logging method according to an exemplary embodiment of the present invention; and
FIG. 4 is a flow chart illustrating an agent data collecting method according to an exemplary embodiment of the present invention.

### Detailed Description of Preferred Embodiments

The invention will be described below in conjunction with an exemplary web-based browser and web server arrangement that is compatible with standard web-based browsers such as, for example, the NETSCAPE browser (available from Netscape Communications Corporation), the standard hypertext transfer protocol (HTTP), and hypertext markup language (HTML). Although particularly well-suited for implementation over the Internet using Transmission Control Protocol/Internet Protocol (TCP/IP) connections, the invention is not limited to use with any particular type of network or network communication protocol. The disclosed techniques are suitable for use with a wide variety of other networks and protocols, and many different types of browsers installed on client computers. Further, the term "processor" as used herein is intended to include any processing device, including a CPU (central processing unit), which may be utilized in a client computer, server computer, or any other computer employed in conjunction with the invention. Also, the term "memory" as used herein is intended to include memory associated with a processor or CPU, such as, for example, RAM, ROM, a fixed memory device (e.g., hard drive), or a removable memory device (e.g., diskette). In addition, the processing device may include one or more input devices, e.g., keyboard, for inputting data to the processing unit, as well as one or more output devices, e.g., CRT display and/or printer, for providing results associated with the processing unit. Further, it is to be understood that one or more processing devices within the network may share associated resources. Accordingly, software instructions or code for performing the methodologies of the invention, described herein, may be stored in one or more of the associated memory devices (ROM, fixed or removable memory) and, when ready to be utilized, loaded into RAM and executed by a CPU.

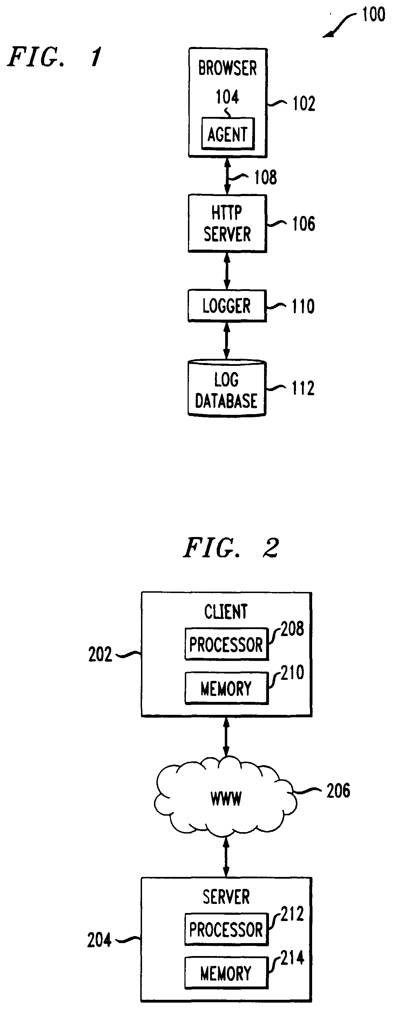

Referring to FIG. 1, a web user activity logging system 100 according to an exemplary embodiment of the invention is shown. The system 100 includes a browser 102 having an agent 104 associated therewith. As previously explained, the browser 102 is a computer software program that runs on a computer of the system 100 and allows a user to, for example, place information requests to various websites associated with network servers. The agent 104 is also a computer software program that is run in conjunction with the browser 102 on a computer of the system 100 and, as will be explained, provides the necessary functionality to permit collection of information pertaining to web user activity according to the invention. It is to be appreciated that the agent 104 is executable content, preferably in the form of an applet, that is dynamically downloaded into a client, preferably at the time when the client receives information, e.g., HTML documents, from a web server in response to a URL request. The applet is preferably mobile code downloaded by the web server to the client pursuant to a mobile programming language such as, for example, the standard JAVA language. Thus, in this instance, the mobile code may be in the form of a JAVA applet. Agent 104 is realized when the applet starts to run within browser 102.

Further, the web user activity logging system 100 of the invention includes a web or HTTP server 106. The web server is coupled to the web browser 102 via a communication channel 108. It is to be appreciated that FIG. 1 includes only one web server and one client web browser merely to illustrate the concepts of the invention, however, there may be any number of web servers and client web browsers with agents operating according to the invention. The web server 106 also includes a logger 110 and a log database 112 for storing information, as will be explained below, in accordance with the invention. While the logger 110 and the log database 112 are shown external to the web server 106 in FIG. 1, it is to be appreciated that these components preferably reside in the server 106. That is, the logger 110 is a computer software program that preferably runs on the server 106 and, as will be explained, provides the necessary functionality to permit web user activity logging at a web server in conjunction with an agent residing in a client's web browser according to the invention. Also, the log database 112 is preferably resident on the server 106 in the form of memory associated therewith. However, it is to be noted that the logger 110 and/or log database 112 may be run on one or more computers separate from the web server 106. In which case, the computer or computers on which the logger and log database reside may be coupled to the web server 106 via one or more communication channels.

Advantageously, when a user makes a request to a web server, for example, to retrieve information, an agent is downloaded into the user's web browser in the form of executable content. While the agent is preferably downloaded along with the document requested by the client, it is to be appreciated that the agent may be established in the web browser, upon a user's request, prior to any request for information. However, once in the web browser, the agent keeps track of, i.e., collects and stores, all user interaction that occurs in the browser, that is, client-side interaction. For example, types of user interaction that may be tracked include information concerning what portion of a retrieved document (e.g., images, form elements, etc.) a user has viewed, what data has been filled in on a form element, modifications to that data, what sequence the data was filled in, etc. Also, information concerning the users page to page navigation through retrieved documents, which may be stored in a browser cache, may be tracked and provided to the server. Of course, the above examples are merely illustrative and, as such, the type of user activity tracked is not limited thereto. Also, as mentioned, the granularity of this tracking can be regulated with the use of information filters associated with the agent, as will be explained, allowing the agent to collect as much information as is available, or some subset thereof. The agent then periodically notifies the server-side entity, i.e., the logger, of all the information that it has collected. The logger processes and stores the information for subsequent use.

FIG. 2 illustrates a client-server system in which web user activity tracking and logging according to the invention may be implemented. As shown, a client computer 202 and a web server 204 are coupled via a communication channel over the WWW network 206. Client 202 includes a processor 208 and associated memory 210 for, e.g., performing the operations associated with the browser 102 and agent 104 according to the invention, as described herein. On the other hand, the server 204 includes a processor 212 and associated memory 214 for, e.g., performing the operations associated with the logger 110 and log database 112 according to the invention, as described herein. The memories 210 and 214 respectively store information associated with operations of the processors. Particularly, memory 210 serves to store the information pertaining to user activity tracked by the agent, while memory 214 serves to store the information logged by the logger in the form of the log database. Further, it is to be understood that the communication channel 108 of FIG. 1, may be implemented as a TCP/IP connection, as is known in the art, over the WWW 206 in FIG. 2. As mentioned, while a single server computer 204 is shown in FIG. 2 for implementing the logger and log database, it is to be understood that the logger and log database may be implemented on one or more separate computers. These computers may communicate with the server 204 via a TCP/IP connection over the WWW 206 or over communication channels separate from the WWW 206.

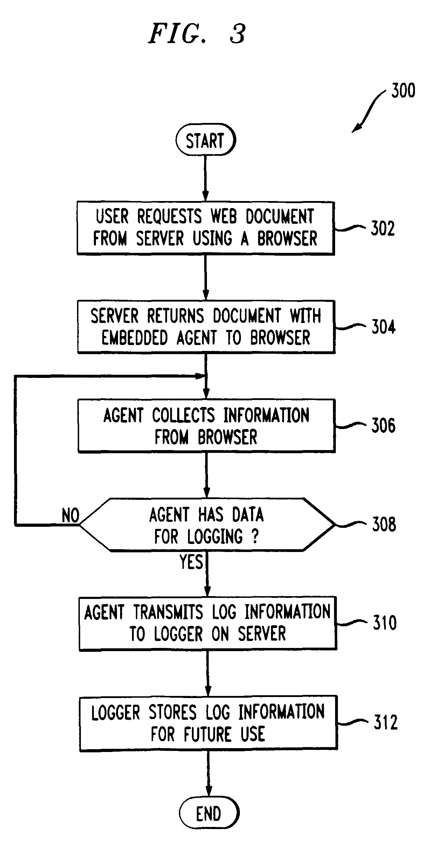

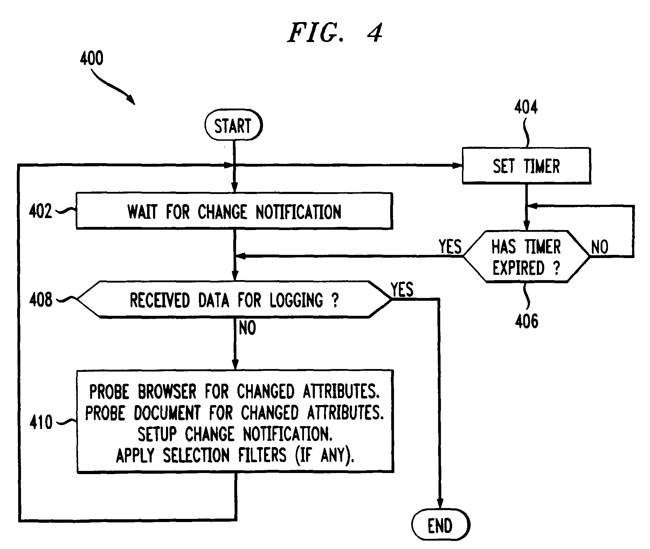

Referring now to FIG. 3, a flow chart of a web user activity logging method 300 according to an exemplary embodiment of the present invention is shown. Initially, in step 302, a user requests a web (e.g., HTML) document from a server (e.g., 106) using a web browser (e.g., browser 102). The server returns the requested document with mobile programming language code representing an agent embedded therein to the browser, in step 304. Then, in step 306, the agent (e.g., agent 104) begins running on the user's computer along with the browser and collects and stores information from the browser pertaining to the user's activity, e.g., the user's interaction with the downloaded HTML document. An exemplary embodiment of an agent data collecting method will be explained below in the context of FIG. 4. Next, in step 308, the agent determines whether it has data for logging at the web server. This determination can be made based on various conditions, e.g., collection of a certain amount of information, collection of a particular type of information, collection of data pertaining to any change in browser attributes, etc. If there is data for logging, the agent then transmits some or all of the collected information as log information to the web server, in step 310. The transmission of the log information from the agent to the web server may be periodic or based on the occurrence of some event. If there is no data for logging, the agent merely continues to wait for data to be collected or probes for data changes, as will be explained. Lastly, in step 312 at the web server, the logger (e.g., logger 110) receives any log information transmitted by the agent and stores such data (e.g., in the log database 112) for future use. The particular format that the logger stores the data in is not critical. However, the data is stored in association with (i.e., indexed to) the particular client from which it was received since the web server may likely be tracking and storing client information from other agents established in other browsers.

Referring now to FIG. 4, a flow chart of an agent data collecting method 400 according to an exemplary embodiment of the present invention is shown. In step 402, the agent passively waits for notification from the browser or downloaded document of a change in an attribute or attributes associated with the browser or downloaded document. That is, attributes (e.g., data fields, sequence of pages viewed, etc.) associated with the browser and/or downloaded document change as a user interacts with the browser and/or downloaded document. However, the agent also sets a timer, in step 404, when it first begins to wait for change notification. The agent monitors whether this timer has expired, in step 406. If notification is received, the particular data is collected and stored for logging, in step 408. If the timer has expired and no data is received, the agent may then actively probe or search the browser or downloaded document for changed attributes, in step 410. Also, in step 410, the agent may setup modified or new change notification criteria and may set up information selection filters that screen the type of attribute changes that get reported to the agent. For example, the agent may enable a selection filter that provides for collection of only a particular type of data. That is, for instance, the agent may only collect and store information indicating which pages of a retrieved document the user actually viewed, or information tracking the sequence of page to page navigation performed by the user. The agent can also reset the timer, in step 404, so that a fixed amount of time is allotted for waiting for information generated by the new or modified change notifications and/or filter selections. The timer may also be reset and monitored for the active probing step. At the expiration of the timer, the agent again checks whether it has received data for logging (step 408). If the agent has received data, it may transmit the data to the logger. If not, the agent may repeat step 410 to possibly setup modified or new criteria or to continue probing for changed data. Alternatively, the agent can return to the passive waiting mode with or without resetting the timer. It is to be appreciated that the change notifications and selection filters can be used to narrow the search performed by the agent in the probing step.

Advantageously, the present invention simplifies the process of logging in CGI infrastructures since individual CGI programs do not have to generate and/or maintain log information. Since the methodologies of the invention are server and CGI-technique independent, the present invention provides a unified method for collecting such information. It is to be appreciated that such an inventive logging facility as described herein may be easily added to existing web servers by those of ordinary skill in the art without any undue experimentation. As a result of the invention, availability of logs of client-side activity and its analysis can lead to better understanding of user behavior. Parties operating web sites can use this information to study how end users interact with the information they provide. While the invention may find application in a variety of computing environments, the methodologies are particularly useful for web-based electronic commerce (E-commerce) as well as web-based customer care.

Although illustrative embodiments of the present invention have been described herein with reference to the accompanying drawings, it is to be understood that the invention is not limited to those precise embodiments, and that various other changes and modifications may be affected therein by one skilled in the art without departing from the scope of the invention.

## Claims

1. A method for use in a server of tracking client activity associated with a browser running on at least one client device, the server and the at least one client device being in a computer network, the method comprising the steps of:
transmitting executable code to the browser operable for collecting at least a portion of data associated with the browser-related client activity and for transmitting the data to the server; and
logging the transmitted data associated with the browser-related client activity at the server.

2. The method of Claim 1, wherein the executable code is transmitted from the server to the browser along with information requested by the browser.

3. The method of Claim 2, wherein the computer network is the Internet and the requested information includes at least one HTML document.

4. The method of Claim 2, wherein the collected data is associated with browser-related client activity pertaining to the transmitted information.

5. The method of Claim 1, wherein the executable code is in the form an applet associated with a mobile programming language.

6. The method of Claim 5, wherein the mobile programming language is Java.

7. A method for use in a client device of tracking client activity associated with a browser running on the client device in conjunction with a server, the client device and the server being in a computer network, the method comprising the steps of:
collecting, in accordance with executable code received from the server in the browser, at least a portion of data associated with the browser-related client activity; and
transmitting, in accordance with the executable code, the data associated with the browser-related client activity to the server for logging therein.

8. The method of Claim 7, wherein the executable code is received from the server along with information requested by the browser.

9. The method of Claim 8, wherein the computer network is the Internet and the requested information includes at least one HTML document.

10. The method of Claim 8, wherein the collected data is associated with browser-related client activity pertaining to the received information.

11. The method of Claim 7, wherein the executable code is in the form an applet associated with a mobile programming language.

12. The method of Claim 11, wherein the mobile programming language is Java.

13. The method of Claim 7, wherein the collecting step further comprises the step of passively waiting for receipt of the data associated with the browser-related client activity.

14. The method of Claim 13, wherein the collecting step further comprises the step of setting and monitoring a timer such that the step of passively waiting for the data is performed for a predetermined amount of time.

15. The method of Claim 7, wherein the collecting step further comprises the step of actively probing for data associated with the browser-related client activity.

16. The method of Claim 15, wherein the collecting step further comprises the step of setting and monitoring a timer such that the step of actively probing for the data is performed for a predetermined amount of time.

17. The method of Claim 7, wherein the collecting step further comprises the step of establishing notification criteria pertaining to the collection of the data associated with the browser-related client activity.

18. The method of Claim 17, wherein the collecting step further comprises the step of changing the notification criteria pertaining to the collection of the data associated with the browser-related client activity.

19. The method of Claim 7, wherein the collecting step further comprises the step of applying selection filters pertaining to the collection of the data associated with the browser-related client activity.

20. Apparatus for use in a server for tracking client activity associated with a browser running on at least one client device, the server and the at least one client device being in a computer network, the apparatus comprising means arranged to carry out a method as claimed in any of claims 1 to 6.

21. An article of manufacture for use in a server for tracking client activity associated with a browser running on at least one client device, the server and the at least one client device being in a computer network, the article comprising a machine readable medium containing one or more programs which when executed implement the steps of a method as claimed in any of claims 1 to 6.

22. Apparatus for use in a client device for tracking client activity associated with a browser running on the client device is conjunction with a server, the client device and the server being in a computer network, the apparatus comprising means arranged to carry out a method as claimed in any of claims 7 to 19.

23. An article of manufacture for use in a client device for tracking client activity associated with a browser running on the client device in conjunction with a server, the client device and the server being in a computer network, the article comprising a machine readable medium containing one or more programs which when executed implement the steps of a method as claimed in any of claims 7 to 19.
